(19) Europäisches Patentamt
European Patent Office
Office européen des brevets

(11) **EP 4 618 183 A1**

(12) **EUROPEAN PATENT APPLICATION**
published in accordance with Art. 153(4) EPC

(43) Date of publication:
**17.09.2025 Bulletin 2025/38**

(21) Application number: **23907706.8**

(22) Date of filing: **20.12.2023**

(51) International Patent Classification (IPC):
$H01M\ 4/36^{(2006.01)}$    $H01M\ 4/525^{(2010.01)}$
$H01M\ 4/505^{(2010.01)}$    $H01M\ 4/587^{(2010.01)}$
$H01M\ 4/38^{(2006.01)}$    $H01M\ 4/48^{(2010.01)}$
$H01M\ 4/62^{(2006.01)}$    $H01M\ 10/052^{(2010.01)}$
$H01M\ 4/02^{(2006.01)}$

(52) Cooperative Patent Classification (CPC):
**H01M 4/02; H01M 4/36; H01M 4/38; H01M 4/48;
H01M 4/505; H01M 4/525; H01M 4/587;
H01M 4/62; H01M 10/052;** Y02E 60/10

(86) International application number:
**PCT/KR2023/021042**

(87) International publication number:
**WO 2024/136423 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.12.2022 KR 20220183720**

(71) Applicant: **LG Energy Solution, Ltd.
Seoul 07335 (KR)**

(72) Inventors:
• **LEE, Eun Ju**
 **Daejeon 34122 (KR)**
• **PARK, Kyu Tae**
 **Daejeon 34122 (KR)**
• **RAH, Kyun Il**
 **Daejeon 34122 (KR)**
• **JUNG, Won Hee**
 **Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **SECONDARY BATTERY**

(57) The present invention relates to a secondary battery comprising: a positive electrode comprising a positive electrode active material; an negative electrode comprising an negative electrode active material; a separator disposed between the positive electrode and the negative electrode; and an electrolyte, wherein the positive electrode comprises a positive electrode active material, and the positive electrode active material comprises at least 15 wt% of a first positive electrode active material in a single-crystal form, wherein the negative electrode comprises a carbon-based active material and a silicon-based active material, and wherein a ratio of a weight $E_N$ of the electrolyte impregnated in the negative electrode to a weight $E_P$ of the electrolyte impregnated in the positive electrode, $E_N/E_P$ is at least 0.9.

EP 4 618 183 A1

**Description**

[Technical Field]

Cross-Reference to Related Application

This application claims priority to and the benefit of Korean Patent Application No. 10-2022-0183720, filed on December 23, 2022, the entire contents of which are incorporated herein by reference.

Technical Field

The present invention relates to a secondary battery, and more particularly, to a lithium secondary battery.

[Background Art]

With the rapid spread of electronic devices using batteries such as mobile phones, laptop computers, and electric vehicles, the demand for a small, light lithium secondary battery with a relatively high capacity is rapidly increasing. In particular, with the rapid development of portable electronic devices, there is a need to develop a lithium secondary battery with high energy density that can be used at high voltages.

In general, a lithium secondary battery includes a positive electrode, a negative electrode, a separator interposed between the positive electrode and the negative electrode, and an electrolyte. In addition, the positive electrode and the negative electrode may have an active material layer including a positive electrode active material or a negative electrode active material on a current collector. In the positive electrode, lithium-containing metal oxides, such as lithium cobalt oxide ($LiCoO_2$), lithium manganese oxide ($LiMn_2O_4$), and lithium nickel cobalt manganese oxide, are commonly used as a positive electrode active material, and in the negative electrode, a carbon-based active material and a silicon-based active material, which do not contain lithium, are used as a negative electrode active material.

Recently, the use of lithium transition metal oxides containing a high content of nickel has been considered to increase the capacity of the positive electrode, and in particular, the material is used in the form of secondary particles to improve the diffusion rate of lithium ions. However, a lithium transition metal oxide in the form of secondary particles is rapidly degraded due to charging and discharging. To solve this problem, the use of single-particle-type lithium transition metal oxide as a positive electrode active material is being considered.

Meanwhile, in the case of a negative electrode, carbon-based active materials (such as graphite) with excellent lifetime performance and stability are mainly used, but the use of a silicon-based active material is being considered to achieve high energy density and increase capacity. However, silicon-based active materials have a large degree of volume expansion due to charging and discharging, which reduces lifetime performance and increases resistance, and thus, they cannot be widely used.

[Disclosure]

[Technical Problem]

The prevent invention is directed to providing a secondary battery with high energy density and improved lifetime performance.

[Technical Solution]

The present invention provides a secondary battery, which includes: a positive electrode including a positive electrode active material; a negative electrode including a negative electrode active material; a separator interposed between the positive electrode and the negative electrode; and an electrolyte, wherein the positive electrode includes a positive electrode active material, the positive electrode active material includes 15 wt% or more of a first positive electrode active material in the form of single particles, wherein the negative electrode includes a carbon-based active material and a silicon-based active material, and wherein a ratio of a weight $E_N$ of the electrolyte impregnated in the negative electrode to a weight $E_P$ of the electrolyte impregnated in the positive electrode, $E_N/E_P$ is 0.9 or more.

[Advantageous Effects]

A secondary battery of the present invention includes: a positive electrode including a positive electrode active material, which includes a specific amount of a first positive electrode active material in the form of single particles; and a negative electrode including a carbon-based active material and a silicon-based active material, wherein the ratio $E_N/E_P$ of the weight $E_N$ of the electrolyte impregnated in the negative electrode to the weight $E_P$ of the electrolyte impregnated in the positive electrode is in a specific range. The secondary battery according to the present invention can achieve high energy density and exhibit excellent lifetime performance through the above-described characteristics.

[Modes of the Invention]

Terms and words used in this specification and claims should not be construed as limited to their conventional or dictionary meanings but should be construed as a meaning and concept consistent with the technical idea of the present invention based on the principle that the inventors can properly define the concept of terms in order to describe their invention in the best way.

The terms used herein are only used to describe exemplary embodiments and are not intended to limit the present invention. Singular expressions include plural expressions unless the context clearly indicates otherwise.

In this specification, the term "include," "provide," or "have" is intended to designate the presence of the implemented features, numbers, steps, elements, or combinations thereof, and it should be understood that it does not exclude in advance the presence or addition of other features, numbers, steps, elements, or combinations thereof.

In this specification, the average particle diameter ($D_{50}$) may be defined as the particle size corresponding to 50% of the cumulative volume in the particle size distribution curve. The average particle diameter ($D_{50}$) may be measured, for example, using a laser diffraction method. The laser diffraction method is generally used to measure particle diameters from the submicron region to several millimeters, and results with high reproducibility and high resolution can be obtained.

Hereinafter, the present invention will be described in detail.

### <Secondary battery>

The present invention relates to a secondary battery, specifically a lithium secondary battery.

Specifically, the secondary battery according to the present invention includes: a positive electrode including a positive electrode active material; a negative electrode including a negative electrode active material; a separator interposed between the positive electrode and the negative electrode; and an electrolyte, wherein the positive electrode includes a positive electrode active material, the positive electrode active material includes 15 wt% or more of a first positive electrode active material in the form of single particles, wherein the negative electrode includes a carbon-based active material and a silicon-based active material, and wherein the ratio of the weight $E_N$ of the electrolyte impregnated in the negative electrode to the weight $E_P$ of the electrolyte impregnated in the positive electrode, $E_N/E_P$ is 0.9 or more.

The secondary battery of the present invention includes: a positive electrode including a positive electrode active material, which includes a specific amount of a first positive electrode active material in the form of single particles; and a negative electrode including a carbon-based active material and a silicon-based active material, wherein the ratio $E_N/E_P$ of the weight $E_N$ of the electrolyte impregnated in the negative electrode to the weight $E_P$ of the electrolyte impregnated in the positive electrode is in a specific range. As a first positive electrode active material is included in the positive electrode, it is possible to improve the lifetime performance of the positive electrode and increase the energy density, but due to the use of the first positive electrode active material in the form of single particles, the amount of electrolyte impregnated in the positive electrode is increased, and the amount of electrolyte impregnated in the negative electrode is relatively decreased. The decrease in electrolyte impregnation amount in the negative electrode causes a rapid deterioration in the lifetime performance of the negative electrode including a carbon-based active material and a silicon-based active material. In order to prevent this problem, the present invention adjusts the $E_N/E_P$ ratio to a specific range, which ensures that the positive electrode and the negative electrode are sufficiently impregnated with an electrolyte, and thus it is possible to implement a secondary battery with high energy density and excellent lifetime performance.

### (1) Positive electrode

The positive electrode includes a positive electrode active material.

The positive electrode active material includes a first positive electrode active material in the form of single particles. The positive electrode active material includes 15 wt% or more of the first positive electrode active material.

The first positive electrode active material is in the form of single particles and has excellent durability because cracks are less likely to occur compared to other active materials in the form of secondary particles. However, the first positive electrode active material has a problem in that the electrolyte impregnation amount is large due to osmotic pressure, which may cause an imbalance in the amount of electrolyte impregnated in the positive and negative electrodes, but the present invention may adjust the ratio of the electrolyte impregnation amounts in the negative and positive electrodes as described later, so that both the negative electrode and the positive electrode are sufficiently impregnated with the electrolyte.

The term "single particle" herein refers to a primary structure of a single particle, which is composed of primary particles rather than secondary particles. On the other hand, the term "secondary particle" herein refers to an aggregate of primary particles held together by physical or chemical bonds without any intentional aggregation or assembly process for the primary particles constituting the secondary particles, that is, a secondary structure.

The average particle diameter ($D_{50}$) of the first positive electrode active material may be 0.1 $\mu$m to 5 $\mu$m, specifically 0.5 $\mu$m to 4.5 $\mu$m, more specifically, 1.5 $\mu$m to 4.5 $\mu$m.

The first positive electrode active material may include a lithium transition metal composite oxide represented by Chemical Formula 1 below.

[Chemical Formula 1] $\quad\quad\quad Li_{a1}Ni_{b1}Co_{c1}M^1_{d1}M^2_{e1}O_2$

In Chemical Formula 1, $M^1$ may be Mn, Al, or a combination thereof, with Mn or Mn and Al being preferred.

$M^2$ may be one or more selected from the group consisting of Zr, W, Y, Ba, Ca, Ti, Mg, Ta, and Nb, preferably one or more selected from the group consisting of Zr, Y, Mg, and Ti, more preferably Zr, Y, or a combination thereof. The $M^2$ element is not necessarily included, but when included in an appropriate amount, it may play a role in promoting grain growth during the sintering process or improving crystal structure stability.

a1 represents the molar ratio of lithium in the lithium transition metal oxide and may satisfy 0.8≤a1≤1.3, 0.9≤a1≤1.3, or 1.0≤a1≤1.2. When the lithium molar ratio satisfies the above range, the crystal structure of the lithium transition metal oxide may be stably formed.

b1 represents the molar ratio of nickel among all metals except lithium in the lithium transition metal oxide and may satisfy 0.8≤b1<1, 0.82≤b1<1, 0.83≤b1<1, or 0.85≤b1<1. When the nickel molar ratio satisfies the above range, high energy density is exhibited, making it possible to achieve high capacity.

c1 represents the molar ratio of cobalt among all metals except lithium in the lithium transition metal oxide and may satisfy 0<c1<0.2, 0<c1<0.18, or 0.01≤c1≤0.17. When the cobalt molar ratio satisfies the above range, adequate resistance characteristics and output characteristics may be achieved.

d1 represents the molar ratio of the $M^1$ element among all metals except lithium in the lithium transition metal oxide and may satisfy 0<d1<0.2, 0<d1<0.18, or 0.01≤d1≤0.17. When the $M^1$ element molar ratio satisfies the above range, the structural stability of the positive electrode active material is excellent.

e1 represents the molar ratio of the $M^2$ element among all metals except lithium in the lithium transition metal oxide and may satisfy 0≤e1≤0.1 or 0≤e1≤0.05.

The positive electrode active material includes 15 wt% or more of the first positive electrode active material. When the first positive electrode active material is included in an amount less than 15 wt%, lithium mobility is significantly reduced, making it impossible to achieve the desired improvement in lifetime performance. The positive electrode active material may include a first positive electrode active material in an amount of 100 wt% or less, and more specifically, the positive electrode active material may be composed of the first positive electrode active material.

The positive electrode active material may further include a second positive electrode active material in the form of secondary particles along with the first positive electrode active material. Specifically, the positive electrode active material may be composed of the first positive electrode active material or a mixture of the first positive electrode active material and the second positive electrode active material.

When the second positive electrode active material in the form of secondary particles is used along with the first positive electrode active material in the form of single particles, it is preferable because the lithium mobility of the positive electrode may be further improved.

The second positive electrode active material may include a lithium transition metal composite oxide represented by Chemical Formula 2 below.

[Chemical Formula 2] $\quad\quad\quad Li_{a2}Ni_{b2}Co_{c2}M^3_{d2}M^4_{e2}O_2$

In Chemical Formula 2, $M^3$ may be Mn, Al, or a combination thereof, with Mn or Mn and Al being preferred.

$M^4$ may be one or more selected from the group consisting of Zr, W, Y, Ba, Ca, Ti, Mg, Ta, and Nb, preferably one or more selected from the group consisting of Zr, Y, Mg, and Ti, more preferably Zr, Y, or a combination thereof. The $M^2$ element is not necessarily included, but when included in an appropriate amount, it may play a role in promoting grain growth during the sintering process or improving crystal structure stability.

a2 represents the molar ratio of lithium in the lithium transition metal oxide and may satisfy 0.8≤a2≤1.3, 0.9≤a2≤1.3, or 1.0≤a2≤1.2. When the lithium molar ratio satisfies the above range, the crystal structure of the lithium transition metal oxide may be stably formed.

b2 represents the molar ratio of nickel among all metals except lithium in the lithium transition metal oxide and may satisfy 0.8≤b2<1, 0.82≤b2<1, 0.83≤ b2<1, or 0.85≤b2<1. When the nickel molar ratio satisfies the above range, high energy density is exhibited, making it possible to achieve high capacity.

c2 represents the molar ratio of cobalt among all metals except lithium in the lithium transition metal oxide and may satisfy $0<c2<0.2$, $0<c2<0.18$, or $0.01\leq c2\leq 0.17$. When the cobalt molar ratio satisfies the above range, good resistance characteristics and output characteristics may be achieved.

d2 represents the molar ratio of the $M^3$ element among all metals except lithium in the lithium transition metal oxide and may satisfy $0<d2<0.2$, $0<d2<0.18$, or $0.01\leq d2\leq 0.17$. When the molar ratio of the $M^3$ element satisfies the above range, the structural stability of the positive electrode active material may be excellent.

e2 represents the molar ratio of the $M^4$ element among all metals except lithium in the lithium transition metal oxide and may satisfy $0\leq e2\leq 0.1$ or $0\leq e2\leq 0.05$.

The average particle diameter ($D_{50}$) of the second positive electrode active material may be larger than the average particle diameter ($D_{50}$) of the first positive electrode active material. Under this circumstance, the positive electrode active material according to the present invention has a bimodal structure including a second positive electrode active material, which is in the form of secondary particles and has a relatively large particle size, and a first positive electrode active material, which is in the form of single particles and has a relatively small particle size, thereby improving the energy density of the positive electrode, minimizing the particle breakage of the second positive electrode active material, improving lifetime performance due to the introduction of the first positive electrode active material (single particles), and minimizing the decrease in lithium mobility by using relatively small particles as the first positive electrode active material.

The average particle diameter ($D_{50}$) of the second positive electrode active material may be 6 $\mu$m to 30 $\mu$m, specifically 8 $\mu$m to 20 $\mu$m.

In the present invention, the ratio of the average particle diameter ($D_{50}$) of the second positive electrode active material to the average particle diameter ($D_{50}$) of the first positive electrode active material may be 1.1 or more, specifically 2 or more, more specifically 3 or more. When the average particle diameters ($D_{50}$) of the first positive electrode active material and the second positive electrode active material satisfy the above ranges, the press density of the positive electrode active material increases, and thus, electrode density is improved during the manufacture of the electrode, and high energy density may be achieved. In addition, the above range is preferable because the decrease in lithium mobility due to the use of single particles may be minimized by adjusting the average particle diameter ($D_{50}$) of the first positive electrode active material to the above-described range. The upper limit of the ratio of the average particle diameter ($D_{50}$) of the second positive electrode active material to the average particle diameter ($D_{50}$) of the first positive electrode active material is not particularly limited and may be, for example, 10 or less, 8 or less, 6 or less, 4 or less.

When the positive electrode active material further includes a second positive electrode active material, the weight ratio of the first positive electrode active material and the second positive electrode active material may be 15:85 to 99:1, specifically 20:80 to 80:20, more specifically 25:75 to 60:40, still more specifically 28:72 to 45:55. Within the above range, the electrode density of the positive electrode may be further increased, and lifetime performance and lithium mobility may be harmoniously improved, which is desirable.

The positive electrode may include a positive electrode current collector and a positive electrode active material layer disposed on at least one side of the positive electrode current collector.

The positive electrode current collector is not particularly limited as long as it has high conductivity without causing chemical changes in the battery. Specifically, the positive electrode current collector may include at least one selected from the group consisting of copper, stainless steel, aluminum, nickel, titanium, calcined carbon, and aluminum-cadmium alloys and may specifically include aluminum.

The positive electrode current collector may typically have a thickness of 3 to 500 $\mu$m.

The positive electrode current collector may have fine irregularities formed on its surface to strengthen the bonding force of the positive electrode active material. For example, the positive electrode current collector may be used in various forms such as films, sheets, foils, nets, porous materials, foams, and non-woven fabric materials.

The positive electrode active material layer may be disposed on the positive electrode current collector and specifically disposed on one or both sides of the positive electrode current collector.

The positive electrode active material layer may include the above-described positive electrode active material.

The positive electrode active material may be included in the positive electrode active material layer in an amount of 80 wt% to 99 wt%, preferably 92 wt% to 98 wt%, in consideration of sufficient capacity of the positive electrode active material.

The positive electrode active material layer may further include a positive electrode binder and a positive electrode conductive material along with the positive electrode active material.

The positive electrode binder is a component that helps in the binding of the active material and the conductive material and the binding of the current collector and may specifically include at least one selected from the group consisting of polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrenebutadiene rubber, and fluororubber, with polyvinylidene fluoride being preferred.

The positive electrode binder may be included in the positive electrode active material layer in an amount of 0.1 wt% to 10 wt%, preferably 0.1 wt% to 3 wt%, more specifically 0.5 wt% to 2.5 wt% in order to ensure a sufficient binding force between components including the positive electrode active material.

The positive electrode conductive material may be used to assist and improve conductivity in secondary batteries and is not particularly limited as long as it has conductivity without causing chemical changes. Specifically, the positive electrode conductive material may include at least one selected from the group consisting of: graphite including natural graphite or artificial graphite; carbon black including acetylene black, ketjen black, channel black, furnace black, lamp black, and thermal black; conductive fibers including carbon fiber and metal fiber; carbon nanotubes such as single-walled carbon nanotubes and multi-walled carbon nanotubes; fluorocarbon; metal powders including aluminum and nickel powders; conductive whiskers including zinc oxide and potassium titanate; conductive metal oxides including titanium oxide; and polyphenylene derivatives, and may specifically include carbon black and carbon nanotubes and more specifically carbon black and multi-walled carbon nanotubes in order to improve conductivity.

The positive electrode conductive material may be included in the positive electrode active material layer in an amount of 0.1 wt% to 10 wt%, specifically 0.1 wt% to 3.0 wt%, more specifically 0.5 wt% to 2.5 wt%, in order to ensure sufficient electrical conductivity.

The positive electrode active material layer may have a thickness of 30 $\mu$m to 400 $\mu$m, preferably 60 $\mu$m to 200 $\mu$m.

The loading amount of the positive electrode may be 2 mAh/cm$^2$ to 6 mAh/cm$^2$, specifically 2.5 mAh/cm$^2$ to 4.5 mAh/cm$^2$.

The positive electrode may have a porosity of 18% to 32%, specifically 20% to 30%, more specifically 20% to 25%, still more specifically 21% to 23%.

The porosity of the positive electrode may be calculated by Equation A below.

$$\text{Porosity of positive electrode (\%)} = \{1 - (\text{Electrode density of positive electrode / True density of positive electrode})\} \times 100 \qquad \text{[Equation A]}$$

In Equation A, the true density of the positive electrode is the density of the positive electrode active material layer measured by collecting a certain size of the positive electrode and pressing it with a press machine until the thickness of the positive electrode does not change, and the electrode density of the positive electrode is the density of the positive electrode active material layer measured by collecting a certain size of the positive electrode.

The positive electrode may be manufactured by coating the positive electrode current collector with a positive electrode slurry including a positive electrode active material and optionally a positive electrode binder, a positive electrode conductive material, and a solvent for forming a positive electrode slurry, followed by drying and rolling.

The solvent for forming the positive electrode slurry may include an organic solvent such as N-methyl-2-pyrrolidone (NMP) and may be used in an amount that results in a desired viscosity when the positive electrode active material and optionally a positive electrode binder, a positive electrode conductive material, and the like are included. For example, the solvent for forming a positive electrode slurry is included in the positive electrode slurry so that the solid content including the positive electrode active material and optionally a positive electrode binder, and a positive electrode conductive material is 50 wt% to 95 wt%, preferably 70 wt% to 90 wt%.

### (2) Negative electrode

The negative electrode may be disposed to face the positive electrode.

The negative electrode includes a negative electrode active material.

The negative electrode active material includes a carbon-based active material and a silicon-based active material.

The negative electrode according to the present invention may be thin and have a high energy density by using a silicon-based active material with high capacity characteristics along with a carbon-based active material. In particular, when the negative electrode according to the present invention is used with the above-described positive electrode, it is preferable because the secondary battery may achieve a high level of energy density. When only a carbon-based active material is used as a negative electrode active material, it is difficult to achieve a high capacity per volume compared to the use of a combination of a carbon-based active material and a silicon-based active material, and in order to achieve a high capacity, the thickness of the negative electrode inevitably increases, and as the thickness of the negative electrode increases, the rate of lithium intercalation from the positive electrode inevitably slows down, and thus, fast-charging performance cannot be improved.

The carbon-based active material may include at least one selected from the group consisting of graphite, hard carbon, soft carbon, carbon black, graphene, and fibrous carbon and may specifically include graphite. For example, the graphite may include at least one selected from the group consisting of artificial graphite and natural graphite.

The carbon-based active material may have an average particle diameter ($D_{50}$) of 5 $\mu$m to 35 $\mu$m, preferably 10 $\mu$m to 20 $\mu$m in order to ensure structural stability during charging and discharging and reduce side reactions with the electrolyte.

The silicon-based active material may include a silicon-based compound represented by $SiO_x$ ($0 \leq x < 2$). The silicon-based compound may be represented by the chemical formula $SiO_x$ ($0 \leq x < 2$) and specifically may be represented by chemical formula $SiO_x$ ($0 < x < 2$). Considering that lithium cannot be stored because $SiO_2$ (when x=2) does not react with lithium ions, x is preferably within the above range. Specifically, the silicon-based compound may be represented by the chemical formula $SiO_x$ ($0.5 \leq x \leq 1.5$).

More specifically, the silicon-based active material may include a silicon-based compound represented by $SiO_x$ ($0 \leq x < 2$) and a metal doped into the silicon-based compound. In general, silicon-based active materials have a problem in that an irreversible reaction occurs, in which some of the lithium ions that have moved to the negative electrode during initial charging do not return to the positive electrode during discharging due to the presence of the irreversible site in the silicon-based active material. In order to prevent this problem, the metal may be doped into the silicon-based compound to reduce the irreversible phase of the silicon-based compound and improve efficiency.

The metal may be doped into the silicon-based compound. Specifically, the metal may be doped into the silicon-based compound and located inside, on the surface, or inside and on the surface of the silicon-based compound. The metal may be doped into the silicon-based compound to form a metal silicate with silicon oxide included in a first silicon-based compound.

The metal may include at least one metal selected from the group consisting of Li, Mg, Ca, and Al. Specifically, in order to control the volume expansion of silicon-based oxide particles, prevent damage, and improve initial efficiency to an adequate level, at least one metal selected from the group consisting of Li and Mg, more specifically Mg, may be included.

The weight of the metal may be 1 wt% to 30 wt%, specifically 5 wt% to 20 wt% based on the total weight of the silicon-based compound and the metal. Within the range, the irreversible capacity of the first silicon-based active material may be sufficiently removed, and a reduction in capacity due to the excessive doping with metals may be prevented. The metal content may be measured using inductively coupled plasma atomic emission spectroscopy (ICP-AES).

The silicon-based active material may further include a carbon coating layer disposed on the surface. The carbon coating layer may function as a protective layer that suppresses the volume expansion of the silicon-based active material and prevents side reactions with the electrolyte.

The carbon coating layer may be included in the silicon-based active material in an amount of 0.1 wt% to 10wt%, preferably 3 wt% to 7 wt%, and this range is preferable because the carbon coating layer may control the volume expansion of the silicon-based active material to an adequate level and prevent side reactions with the electrolyte.

The carbon coating layer may be an amorphous carbon coating layer. Specifically, the carbon coating layer may be formed by chemical vapor deposition (CVD) using at least one hydrocarbon gas selected from the group consisting of methane, ethane, and acetylene.

The average particle diameter ($D_{50}$) of the silicon-based active material may be 1 $\mu$m to 15 $\mu$m, more preferably 2 $\mu$m to 10 $\mu$m in order to ensure the structural stability of the active material during charging and discharging and prevent a large volume expansion/contraction as the particle diameter becomes excessively large and a reduction in initial efficiency due to an excessively small particle diameter.

The weight ratio of the carbon-based active material to the silicon-based active material may be 60:40 to 99:1, specifically 83:17 to 99:1, more specifically 88:12 to 98:2. Within the above range, it is possible to secure sufficient capacity of the negative electrode while reducing the influence of the silicon-based active material on the volume expansion and implement a negative electrode with high loading.

The negative electrode may include a negative electrode current collector and a negative electrode active material layer disposed on at least one side of the negative electrode current collector.

The negative electrode current collector is not particularly limited as long as it has high conductivity without causing chemical changes in the battery. Specifically, the negative electrode current collector may include at least one selected from the group consisting of copper, stainless steel, aluminum, nickel, titanium, calcined carbon, and aluminum-cadmium alloys and may specifically include copper.

The negative electrode current collector may typically have a thickness of 3 to 500 $\mu$m.

The negative electrode current collector may have fine irregularities formed on its surface to strengthen the bonding force of the negative electrode active material. For example, the negative electrode current collector may be used in various forms such as films, sheets, foils, nets, porous materials, foams, and non-woven fabric materials.

The negative electrode active material layer may be formed on at least one surface of the negative electrode current collector. Specifically, the negative electrode active material layer may be formed on one or both sides of the negative electrode current collector.

The negative electrode active material layer includes the above-described negative electrode active material.

The negative electrode active material may be included in the negative electrode active material layer in an amount of 65 wt% to 98 wt%, specifically 80 wt% to 95 wt%.

The negative electrode active material layer may further include a negative electrode binder and a negative electrode conductive material along with the negative electrode active material.

In order to further improve electrode adhesion and provide sufficient resistance to the volume expansion/contraction of the active material, the negative electrode binder may include at least one selected from the group consisting of polyvinylidene fluoride (PVdF), styrene butadiene rubber (SBR), acrylonitrile butadiene rubber, acrylic rubber, butyl rubber, fluororubber, carboxymethyl cellulose (CMC), starch, hydroxypropyl cellulose, regenerated cellulose, polyvinyl alcohol (PVA), polyacrylic acid (PAA), polyethylene glycol (PEG), polyacrylonitrile (PAN), and polyacryl amide (PAM) and specifically include styrene butadiene rubber (SBR).

The negative electrode binder may be included in the negative electrode active material layer in an amount of 0.1 wt% to 10 wt%, specifically 2 wt% to 8 wt%. Within the range, it is preferable because it is possible to implement a negative electrode with high capacity along with the effect of improving adhesion and controlling the thickness expansion of the negative electrode.

The negative electrode conductive material may be used to improve the conductivity of the negative electrode active material layer and preferably have conductivity without causing chemical changes. Specifically, the negative electrode conductive material may be at least one selected from the group consisting of natural graphite, artificial graphite, carbon black, acetylene black, ketjen black, channel black, furnace black, lamp black, thermal black, conductive fibers, single-wall carbon nanotubes (SWCNTs), multi-wall carbon nanotubes (MWCNTs), fluorocarbon, aluminum powder, nickel powder, zinc oxide, potassium titanate, titanium oxide, and polyphenylene derivatives.

The conductive material may be included in the negative electrode active material layer in an amount of 0.1 wt% to 10 wt%, and within this range, it is preferable because the volume expansion due to charging and discharging may be controlled while preventing disconnection of the conductive network due to the volume expansion of the negative electrode active material.

The negative electrode active material layer may further include a thickener. The thickener may include carboxymethylcellulose (CMC).

The thickener may be included in the negative electrode active material layer in an amount of 0.5 wt% to 5wt% but is not limited thereto.

The loading amount of the negative electrode active material layer may be 2 mAh/cm$^2$ to 6 mAh/cm$^2$, specifically 3 mAh/cm$^2$ to 5 mAh/cm$^2$.

The negative electrode active material layer may have a thickness of 20 $\mu$m to 200 $\mu$m, specifically 50 $\mu$m to 130 $\mu$m. The negative electrode according to the present invention may be a thin negative electrode with high energy density by using a carbon-based active material and a silicon-based active material, and the lithium intercalation from the above-described positive electrode is smooth, thereby improving fast-charging performance.

The negative electrode active material layer may be formed by preparing a negative electrode slurry through the addition of the carbon-based active material, the silicon-based active material, and optionally a negative electrode binder, a negative electrode conductive material, and/or a thickener to a solvent (such as water) and then coating the negative electrode current collector with the negative electrode slurry, followed by rolling and drying.

The negative electrode may have a porosity of 20% to 40%, specifically 23% to 32%.

The porosity of the negative electrode may be calculated by Equation B below.

$$\text{Porosity of negative electrode (\%)} = \{1 - (\text{Electrode density of negative electrode} / \text{True density of negative electrode})\} \times 100 \qquad \text{[Equation B]}$$

In Equation B, the true density of the negative electrode is the density of the negative electrode active material layer measured by collecting a certain size of the negative electrode and pressing it with a press machine until the thickness of the negative electrode does not change, and the electrode density of the negative electrode is the density of the negative electrode active material layer measured by collecting a certain size of the negative electrode.

The negative electrode active material layer may have a double layer structure. Specifically, the negative electrode active material layer may include a first negative electrode active material layer disposed on the negative electrode current collector and a second negative electrode active material layer disposed on the first negative electrode active material layer.

Specifically, the negative electrode active material may include a first negative electrode active material and a second negative electrode active material. The first negative electrode active material may include a first carbon-based active material and a first silicon-based active material. The second negative electrode active material may include a second carbon-based active material and a second silicon-based active material. The first negative electrode active material layer may include the first carbon-based active material and the first silicon-based active material, and the second negative electrode active material layer may include the second carbon-based active material and the second silicon-based active material.

In this specification, "first negative electrode active material" and "second negative electrode active material;" "first carbon-based active material" and "second carbon-based active material;" and "first silicon-based active material" and "second silicon-based active material" are terms used to describe where the carbon-based active material and the silicon-based active material are included, and the description of the carbon-based active material and the silicon-based active material described above may be equally applicable.

The first negative electrode active material layer may include the first carbon-based active material and the first silicon-based active material at a weight ratio of 60:40 to 99:1, specifically 83:17 to 99:1, more specifically 88:12 to 98:2. The second negative electrode active material layer may include the second carbon-based active material and the second silicon-based active material at a weight ratio of 60:40 to 99:1, specifically 83:17 to 99:1, more specifically 88:12 to 98:2. Within the above range, it is possible to secure sufficient capacity of a negative electrode and implement a negative electrode with high loading while reducing the influence of the silicon-based active material on volume expansion.

When the negative electrode active material layer includes a first negative electrode active material layer and a second negative electrode active material layer, and the negative electrode active material layer includes the negative electrode binder, the negative electrode conductive material, and/or the thickener described above, the negative electrode binder may include a first negative electrode binder and a second negative electrode binder, the negative electrode conductive material may include a first negative electrode conductive material and a second negative electrode conductive material, and the thickener may include a first thickener and a second thickener. The first negative electrode active material layer may further include the first negative electrode binder, the first negative electrode conductive material, and/or the first thickener along with the first carbon-based active material and the first silicon-based active material. The second negative electrode active material layer may include the second negative electrode binder, the second negative electrode conductive material, and/or the second thickener along with the second carbon-based active material and the second silicon-based active material.

In this specification, "first negative electrode binder" and "second negative electrode binder;" "first negative electrode conductive material" and "second negative electrode conductive material;" and "first thickener" and "second thickener" are terms used to describe where the negative electrode binder, the negative electrode conductive material, and the thickener are included, and the description of the negative electrode binder, the negative electrode conductive material, and the thickener described above may be equally applicable.

The first negative electrode binder may be included in the first negative electrode active material layer in an amount of 0.1 wt% to 10 wt%, specifically 2 wt% to 8 wt%. The second negative electrode binder may be included in the second negative electrode active material layer in an amount of 0.1 wt% to 10 wt%, specifically 2 wt% to 8 wt%.

The first conductive material may be included in the first negative electrode active material layer in an amount of 0.1 wt% to 10 wt%. The second conductive material may be included in the second negative electrode active material layer in an amount of 0.1 wt% to 10 wt%.

The first thickener may be included in the first negative electrode active material layer in an amount of 0.5 wt% to 5 wt%. The second thickener may be included in the second negative electrode active material layer in an amount of 0.5 wt% to 5 wt%.

When the negative electrode active material layer includes the first negative electrode active material layer and the second negative electrode active material layer, the manufacture of the negative electrode may not be particularly limited as long as it is possible to implement a first negative electrode active material layer and a second negative electrode active material layer having the above-described characteristics. For example, a negative electrode according to the present invention may be manufactured by dispersing a first negative electrode active material (a first carbon-based active material and a first silicon-based active material), a first binder, a first conductive material, and/or a thickener in a solvent (such as water) to prepare a slurry for a first negative electrode active material layer and dispersing a second negative electrode active material (a second carbon-based active material and a second silicon-based active material), a second binder, and/or a second conductive material in a solvent (such as water) to prepare a slurry for a second negative electrode active material layer, and then coating a negative electrode current collector with the slurries. More specifically, a negative electrode according to the present invention may be manufactured after the above-prepared slurry for the first negative electrode active material layer is applied to the negative electrode current collector, rolled, and dried to form a first negative electrode active material layer, and the above-prepared slurry for the second negative electrode active material layer is applied to the first negative electrode active material layer, rolled, and dried to form a second negative electrode active material layer. In addition, a negative electrode according to the present invention may be manufactured by applying the slurry for the first negative electrode active material layer to a negative electrode current collector and simultaneously applying the slurry for the second negative electrode active material layer to the slurry for the first negative electrode active material layer, followed by rolling and drying.

**(3) Separator**

The separator separates the negative electrode and the positive electrode and provides a passage for lithium ions to move and may be used without particular limitation as long as it is typically used as a separator in lithium secondary batteries. In particular, the separator may preferably have low resistance to ion movement in the electrolyte and have an excellent electrolyte impregnation ability. Specifically, porous polymer films may be used, and for example, porous polymer films prepared by polyolefin-based polymers such as an ethylene homopolymer, propylene homopolymer, ethylene/butene copolymer, ethylene/hexene copolymer, and ethylene/methacrylate copolymer, and the like or a laminated structure of two or more thereof may be used. In addition, commonly used porous non-woven fabric materials such as non-woven fabric materials made of high melting point glass fibers and polyethylene terephthalate fibers, and the like may be used. In order to ensure heat resistance or mechanical strength, a coated separator containing ceramic components or polymers may be used, and optionally a single-layer or multi-layer structure may be used.

**(4) Electrolyte**

The electrolyte may be included in the secondary battery, and the positive electrode and the negative electrode may be impregnated with the electrolyte.

An electrolyte used in the present invention may be an organic liquid electrolyte, an inorganic liquid electrolyte, a solid polymer electrolyte, a gel-type polymer electrolyte, an inorganic solid electrolyte, and an inorganic molten electrolyte, which may be used in the manufacture of secondary batteries but is not limited thereto.

Specifically, the electrolyte may include an organic solvent and a lithium salt.

The lithium salt may be used without particular limitation as long as it is a compound that can provide lithium ions used in lithium secondary batteries. Specifically, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. LiCl, LiI, or $LiB(C_2O_4)_2$. The concentration of the lithium salt is preferably used within the range of 0.1 M to 2.0 M. When the lithium salt concentration is within the above range, since the electrolyte has appropriate conductivity and viscosity, it exhibits excellent performance and allows lithium ions to effectively move.

The organic solvent may include at least one selected from linear carbonates, cyclic carbonates, linear esters, cyclic esters, ethers, glymes, and nitriles.

The linear carbonate may include at least one selected from the group consisting of dimethyl carbonate (DMC), diethyl carbonate (DEC), dipropyl carbonate, ethyl methyl carbonate (EMC), methyl propyl carbonate, and ethyl propyl carbonate.

The cyclic carbonate may include at least one selected from the group consisting of ethylene carbonate (EC), propylene carbonate (PC), 1,2-butylene carbonate, 2,3-butylene carbonate, 1,2-pentylene carbonate, and 2, 3-pentylene carbonate.

Specific examples of the linear ester may include, but are not limited to, methyl acetate, ethyl acetate, propyl acetate, methyl propionate, ethyl propionate, propyl propionate, and butyl propionate.

Specific examples of the cyclic ester may include, but are not limited to, $\gamma$-butyrolactone, $\gamma$-valerolactone, $\gamma$-caprolactone, $\sigma$-valerolactone, and $\varepsilon$-caprolactone.

Specific examples of the ether may include, but are not limited to, dimethyl ether, diethyl ether, dipropyl ether, methyl ethyl ether, methyl propyl ether, ethyl propyl ether, 1,3-dioxolane (DOL), and 2,2-bis (trifluoromethyl)-1,3-dioxolane (TFDOL).

Specific examples of the glyme may include, but are not limited to, dimethoxyethane (glyme, DME), diethoxyethane, digylme, triglyme, and tetra-glyme (TEGDME).

Specific examples of the nitrile may include, but are not limited to, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

More specifically, the organic solvent may include a cyclic carbonate, a linear ester, and a halogen-containing cyclic carbonate. In this case, not only the effect of realizing the high dielectric constant of the cyclic carbonate and improving ionic conductivity, but also the effect of realizing the appropriate viscosity of the linear ester, improving electrolyte impregnation and reducing the degree of reductive decomposition at high voltages may be simultaneously improved, which is more preferable in terms of improved stability and lifetime performance at high voltages. In particular, the halogen-containing cyclic carbonate is preferable because it may form a stable solid electrolyte interphase layer (SEI layer) on the negative electrode of the present invention using a silicon-based active material.

When the organic solvent includes a cyclic carbonate, a linear ester, and a halogen-containing cyclic carbonate, the cyclic carbonate may include at least one selected from ethylene carbonate and propylene carbonate as a halogen-free cyclic carbonate, and the linear ester may include at least one selected from ethyl propionate and propyl propionate, and the halogen-containing cyclic carbonate may include at least one selected from fluoroethylene carbonate and difluoroethylene carbonate.

When the organic solvent includes a cyclic carbonate, a linear ester, and a halogen-containing cyclic carbonate, the cyclic carbonate may be included in the organic solvent in an amount of 10 wt% to 50 wt%, specifically 15 wt% to 30 wt%, the linear ester may be included in the organic solvent in an amount of 30 wt% to 80 wt%, specifically 40 wt% to 70 wt%, and the halogen-containing cyclic carbonate may be included in the organic solvent in an amount of 5 wt% to 30 wt%, specifically 10 wt% to 25 wt%.

The electrolyte may further include an additive along with a lithium salt and an organic solvent.

The additive may include at least one selected from the group consisting of vinylethylene carbonate, propane sultone, lithium tetrafluoro borate ($LiBF_4$), lithium difluoro(oxalato) borate (LiODFB), 1,3,6- hexane tri-cyanide (HTCN), and sodium superoxide ($NaO_2$) and specifically may include fluoroethylene carbonate, difluoroethylene carbonate, vinylethylene carbonate, propane sultone, lithium tetrafluoro borate ($LiBF_4$), lithium difluoro(oxalato) borate (LiODFB), 1,3,6-hexane tri-cyanide (HTCN), succinonitrile, 1,4-dicyano-2-butyne, adiponitrile, lithium difluorophosphate ($LiPO_2F_2$), and sodium superoxide ($NaO_2$).

The additive may be included in the electrolyte in an amount of 0.1 wt% to 20 wt%, specifically 1 wt% to 10 wt%, but is not limited thereto.

(5) $E_N/E_P$

According to the present invention, the ratio $E_N/E_P$ of the weight $E_N$ of the electrolyte impregnated in the negative electrode to the weight $E_P$ of the electrolyte impregnated in the positive electrode is 0.9 or more.

As described above, when a first positive electrode active material in the form of single particles is included in the positive electrode active material in an amount of 15 wt% or more, the amount of electrolyte impregnated in the positive electrode increases due to osmotic pressure. This uneven distribution of the electrolyte in the positive electrode causes a decrease in the amount of electrolyte impregnated in the negative electrode. When the negative electrode is not sufficiently impregnated with the electrolyte, problems such as reduced charge/discharge performance and increased resistance cause a rapid deterioration in the performance of secondary batteries. These problems are aggravated, especially when a silicon-based active material, which has poor durability, is used as a negative electrode active material.

In order to solve the above problems, the secondary battery of the present invention uses the above-described positive and negative electrodes, and the ratio $E_N/E_P$ of the weight $E_N$ of the electrolyte impregnated in the negative electrode to the weight $E_P$ of the electrolyte impregnated in the positive electrode is adjusted to 0.9 or more. When the $E_N/E_P$ ratio is less than 0.9, the amount of electrolyte impregnated in the positive electrode is excessively increased, causing an imbalance in the electrolyte impregnation of the positive electrode and the negative electrode, and thus, lifetime performance may rapidly deteriorate.

The $E_N/E_P$ ratio may be 0.9 or more, specifically 1 or more, more specifically 1.3 or more, and within the above range, since the positive electrode and the negative electrode are impregnated with the electrolyte in a balanced manner, it is possible to implement a secondary battery with high energy density and remarkably improved lifetime performance. The upper limit of the $E_N/E_P$ ratio is not particularly limited, and the $E_N/E_P$ ratio may be, for example, 1.6 or less, specifically 1.5 or less.

The $E_N/E_P$ ratio may be adjusted by changing the thickness, loading amount, and porosity of the positive electrode and the negative electrode and the electrolyte impregnability of the positive electrode and the negative electrode, but is not limited thereto.

The $E_N/E_P$ ratio may be measured one week or more after the electrolyte has been injected into the secondary battery, or after an activation process has been performed on the secondary battery, or after an activation process has been performed on the secondary battery and the SOC of the secondary battery is greater than 0% and less than 30%. Specifically, the $E_N/E_P$ ratio may be measured after an activation process is performed on the secondary battery. It is sufficient to measure the $E_N/E_P$ ratio after the activation process is performed on the secondary battery, and it is not limited by conditions of the activation process, and for example, it is sufficient to measure the $E_N/E_P$ ratio in the beginning of life (BOL) state or after the secondary battery is manufactured and then shipped.

The $E_N/E_P$ ratio may be calculated in the following manner:

(a1) separating the negative electrode and the positive electrode from the secondary battery and measuring the weight $E_{N1}$ of the negative electrode and the weight $E_{P1}$ of the positive electrode;
(a2) washing the separated negative electrode and positive electrode with a solvent to remove the electrolyte, drying them, and then measuring the weight $E_{N2}$ of the negative electrode and the weight $E_{P2}$ of the positive electrode; and
(a3) calculating the $E_N/E_P$ ratio using Equation 1 below.

[Equation 1]

$$E_N/E_P = (E_{N1} - E_{N2}) / (E_{P1} - E_{P2})$$

In the $E_N/E_P$ calculation method, the separated negative electrode and positive electrode may be washed using a solvent such as dimethyl carbonate.

After washing the negative electrode and the positive electrode, the drying process may be performed under vacuum and at a temperature of 25 °C to 55 °C. The drying process may be performed for 0.5 to 12 hours.

In the secondary battery of the present invention, the N/P ratio calculated by Equation C below may be 1.0 to 1.2, preferably 1.02 to 1.10.

N/P ratio = {(Discharge capacity per unit area of negative electrode) / (Discharge capacity per unit area of positive electrode)}     [Equation C]

Specifically, the discharge capacity per unit area of the negative electrode may be obtained in the following manner. First, a negative electrode sample identical to the used negative electrode is prepared. After manufacturing a coin-shaped half-cell including the negative electrode sample, a lithium metal counter electrode opposing the negative electrode, a separator interposed between the negative electrode and the lithium metal counter electrode, and an electrolyte, the discharge capacity is calculated. The discharge capacity per unit area of the negative electrode may be obtained by dividing the discharge capacity by the area of the negative electrode sample.

In addition, the discharge capacity per unit area of the positive electrode may be obtained in the following manner. First, a positive electrode sample identical to the used positive electrode is prepared. After manufacturing a coin-shaped half-cell including the positive electrode sample, a lithium metal counter electrode opposing the positive electrode, a separator interposed between the positive electrode and the lithium metal counter electrode, and an electrolyte, the discharge capacity is calculated. The discharge capacity per unit area of the positive electrode may be obtained by dividing the discharge capacity by the area of the positive electrode sample.

The secondary battery may further include a battery case accommodating the negative electrode, the positive electrode, the separator, and the electrolyte.

The secondary battery may be manufactured by manufacturing an electrode assembly including the positive electrode, the negative electrode opposing the positive electrode, and a separator interposed between the positive electrode and the negative electrode, accommodating the electrode assembly in a battery case, and injecting an electrolyte into the battery case and sealing it.

The present invention provides a battery module including the secondary battery as a unit cell and a battery pack including the same.

The battery module or the battery pack may be used as a power source for one or more mid- to large-sized devices among power tools, electric vehicles (EVs) including hybrid electric vehicles, plug-in hybrid electric vehicles (PHEVs), or power storage systems.

The outer shape of the lithium secondary battery of the present invention is not particularly limited, but may be a cylindrical shape using a can, a prismatic shape, a pouch shape, or a coin shape.

The lithium secondary battery according to the present invention may not only be used in battery cells as a power source for small devices, but also be preferably used as a unit cell in mid- and large-sized battery modules including a plurality of battery cells.

As an example, the mid- to large-sized devices may include electric vehicles, hybrid electric vehicles, plug-in hybrid electric vehicles, and power storage systems but are not limited thereto.

Hereinafter, examples of the present invention will be described in detail so that those skilled in the art can easily implement the present invention. However, the present invention may be implemented in various forms and is not limited to the examples described herein.

## Examples

Example 1: Manufacture of secondary battery

1. Manufacture of positive electrode

As a first positive electrode active material, $Li[Ni_{0.8}Co_{0.1}Mn_{0.1}]O_2$ was prepared. The first positive electrode active material was in the form of single particles and had an average particle diameter ($D_{50}$) of 3 $\mu$m.

As a second positive electrode active material, $Li[Ni_{0.8}Co_{0.1}Mn_{0.1}]O_2$ was prepared. The second positive electrode active material was in the form of secondary particles and had an average particle diameter ($D_{50}$) of 10 $\mu$m.

The first positive electrode active material and the second positive electrode active material were mixed at a weight ratio of 50:50 to prepare a positive electrode active material.

The positive electrode active material, carbon nanotubes as a conductive material, and polyvinylidene fluoride (PVdF) as a binder were added at a weight ratio of 98:1:1 to N-methyl-2-pyrrolidone (NMP) as a solvent for forming a positive electrode slurry to prepare a positive electrode slurry.

An aluminum current collector (thickness: 15 $\mu$m) as a positive electrode current collector was coated with the positive electrode slurry at a loading amount of 4 mAh/cm$^2$, roll pressed, and dried in a vacuum oven at 130 °C for 10 hours to form a positive electrode active material layer (thickness: 110 $\mu$m) and manufacture a positive electrode. The porosity of the positive electrode was adjusted to 21%.

2. Manufacture of negative electrode

Graphite (average particle diameter ($D_{50}$): 18 $\mu$m) as a carbon-based active material and SiO (average particle diameter ($D_{50}$): 3 $\mu$m) as a silicon-based active material were prepared. The carbon-based active material and the silicon-based active material were mixed at a weight ratio of 95:5 to prepare a negative electrode active material.

The negative electrode active material, styrene butadiene rubber (SBR) as a negative electrode binder, carboxymethylcellulose (CMC) as a thickener, and carbon black as a negative electrode conductive material were mixed at a weight ratio of 95.3:2.5:1.2:1.0 and added to water as a solvent to form a negative electrode slurry.

A copper foil (thickness: 8 $\mu$m) as a negative electrode current collector was coated with the negative electrode slurry at a loading amount of 4.3 mAh/cm$^2$, roll pressed, and dried in a vacuum oven at 130 °C for 10 hours to form a negative electrode active material layer (thickness: $\mu$m) and manufacture a negative electrode. The porosity of the negative electrode was 25%.

3. Manufacture of secondary battery

A secondary battery of Example 1 was manufactured by interposing a polyethylene separator between the negative electrode and the positive electrode manufactured above and injecting an electrolyte. As the electrolyte, an electrolyte obtained by adding LiPF6 as a lithium salt at a concentration of 1.0 mol/L to an organic solvent in which ethylene carbonate (EC) and ethyl methyl carbonate (EMC) were mixed at a volume ratio of 30:70 was used.

The N/P ratio of the secondary battery of Example 1 was 1.08.

4. Measurement of $E_N/E_P$

The secondary battery manufactured above was activated to be in the beginning of life (BOL) state. The negative electrode and the positive electrode were separated from the secondary battery in the BOL state, and the weight $E_{N1}$ of the negative electrode and the weight $E_{P1}$ of the positive electrode were measured.

The separated negative electrode and positive electrode were washed with a solvent (dimethyl carbonate) to remove the electrolyte, dried under vacuum at 25 °C for 6 hours, and then the weight $E_{N2}$ of the negative electrode and the weight $E_{P2}$ of the positive electrode were measured.

$E_N/E_P$ was calculated using Equation 1 below, and the value was 1.21.

[Equation 1]

$$E_N/E_P = (E_{N1} - E_{N2}) / (E_{P1} - E_{P2})$$

Example 2: Manufacture of secondary battery

A secondary battery was manufactured in the same manner as in Example 1, except that a positive electrode active material was prepared by mixing a first positive electrode active material and a second positive electrode active material at a weight ratio of 30:70. In Example 2, the loading amount of the positive electrode slurry was 4 mAh/cm$^2$, the thickness of the positive electrode active material layer was 112 $\mu$m, and the porosity of the positive electrode was adjusted to 22%.

$E_N/E_P$ in Example 2 was 1.46. The N/P ratio of secondary battery of Example 2 was 1.08.

Example 3: Manufacture of secondary battery

A positive electrode and a secondary battery were manufactured in the same manner as in Example 1, except that only a first positive electrode active material was used as a positive electrode active material, excluding a second positive electrode active material. In Example 3, the loading amount of the positive electrode slurry was 4 mAh/cm$^2$, the thickness of the positive electrode active material layer was 118 $\mu$m, and the porosity of the positive electrode was adjusted to 28%.

$E_N/E_P$ in Example 3 was 1.25. The N/P ratio of secondary battery of Example 3 was 1.08.

Comparative Example 1: Manufacture of secondary battery

A positive electrode and a secondary battery were manufactured in the same manner as in Example 1, except that only a first positive electrode active material was used as a positive electrode active material, excluding a second positive electrode active material, and the porosity of the positive electrode was adjusted to 20% by adjusting the pressurization degree of the roll press. In Comparative Example 1, the loading amount of the positive electrode slurry was 4 mAh/cm$^2$, the thickness of the positive electrode active material layer was 112 $\mu$m, and the porosity of the positive electrode was 20%.

$E_N/E_P$ in Comparative Example 1 was 0.84. The N/P ratio of secondary battery of Comparative Example 1 was 1.08.

Comparative Example 2: Manufacture of secondary battery

A secondary battery was manufactured in the same manner as in Example 1, except that a first positive electrode active material and a second positive electrode active material were mixed at a weight ratio of 10:90 to prepare a positive electrode active material. In Comparative Example 2, the loading amount of the positive electrode slurry was 4 mAh/cm$^2$, the thickness of the positive electrode active material layer was 122 $\mu$m, and the porosity of the positive electrode was adjusted to 28%.

$E_N/E_P$ in Comparative Example 2 was 1.45. The N/P ratio of secondary battery of Comparative Example 2 was 1.08.

**Experimental Examples**

**Experimental Example** 1: **Measurement of capacity retention rate**

The lithium secondary batteries of Examples 1 to 3 and Comparative Examples 1 and 2 manufactured above were charged to 4.2 V and 1/40 C under conditions of CC/CV at 0.33 C and 25 °C and then discharged to 2.5 V under conditions of CC at 0.5 C as one cycle, using an electrochemical charging and discharging device, and N cycles of charge and discharge were performed.

(1) Capacity retention rate

The capacity retention rate was calculated using the equation below, and results thereof are shown in Table 1 below.

Capacity retention rate (%) = {(Discharge capacity after N cycles / Discharge capacity after 1 cycle)} $\times$ 100

In the above equation, N is an integer of 1 or more.

(2) Resistance increase rate

After one cycle of charging and discharging, the discharge capacity after one cycle was measured using an electrochemical charging and discharging device, and after adjusting the SOC to 50%, a pulse of 2.5 C was applied for 10 seconds to calculate the initial resistance through the difference between the voltages before and after pulse application.

After N cycles (N is an integer of 1 or more) of charging and discharging, the resistance after N cycles was calculated in the same manner as above, and the resistance increase rate was calculated using the equation below, and results thereof are shown in Table 1 below.

**EP 4 618 183 A1**

Resistance increase rate (%) = (Resistance after N cycles - Initial resistance)/Initial resistance × 100 (In the above equation, N is an integer of 1 or more.)

[Table 1]

|  | Measured cycles (N) | Experimental Example 1: capacity retention rate (%) | Experimental Example 2: resistance increase rate (%) |
|---|---|---|---|
| Example 1 | 500 | 94.5 | 4.0 |
| Example 2 | 900 | 94.0 | 6.0 |
| Example 3 | 500 | 94.0 | 5.0 |
| Comparative Example 1 | 100 | 82.5 | 50.0 |
| Comparative Example 2 | 500 | 91.4 | 46.0 |

Referring to Table 1, it can be seen that the secondary batteries of Examples 1 to 3 according to the present invention had a high capacity retention rate and a low resistance increase rate even after many cycles of charging and discharging. In particular, the secondary battery of Example 2 had remarkably excellent lifetime characteristics and resistance characteristics even after 900 cycles of charging and discharging.

However, the secondary batteries of Comparative Examples 1 and 2 had a very low capacity retention rate and an excessively high resistance increase rate. Therefore, it can be confirmed that the lifetime performance and resistance characteristics of the secondary battery may be significantly improved through the combination of the composition of the positive electrode and the negative electrode and the $E_N/E_P$ value of the secondary battery according to the present invention.

**Claims**

1. A secondary battery comprising:

    a positive electrode including a positive electrode active material;
    a negative electrode including a negative electrode active material;
    a separator interposed between the positive electrode and the negative electrode; and
    an electrolyte,
    wherein the positive electrode includes a positive electrode active material,
    wherein the positive electrode active material includes 15 wt% or more of a first positive electrode active material in the form of single particles,
    wherein the negative electrode includes a carbon-based active material and a silicon-based active material, and
    wherein a ratio of a weight $E_N$ of the electrolyte impregnated in the negative electrode to a weight $E_P$ of the electrolyte impregnated in the positive electrode, $E_N/E_P$ is 0.9 or more.

2. The secondary battery of claim 1, wherein an average particle diameter ($D_{50}$) of the first positive electrode active material is 0.1 $\mu$m to 5 $\mu$m.

3. The secondary battery of claim 1, wherein the first positive electrode active material includes a lithium transition metal composite oxide represented by Chemical Formula 1 below:

    [Chemical Formula 1]     $Li_{a1}Ni_{b1}Co_{c1}M^1_{d1}M^2_{e1}O_2$

    in Chemical Formula 1,

    $M^1$ is Mn, Al, or a combination thereof,
    $M^2$ is one or more selected from the group consisting of Zr, W, Y, Ba, Ca, Ti, Mg, Ta, and Nb,
    a1, b1, c1, d1, and e1 are atomic fractions of each independent element and satisfy $0.8 \leq a1 \leq 1.3$, $0.8 \leq b1 < 1$, $0 < c1 < 0.2$, $0 < d1 < 0.2$, $0 \leq e1 \leq 0.1$, and $b1+c1+d1+e1=1$.

4. The secondary battery of claim 1, wherein the positive electrode active material further includes a second positive electrode active material in the form of secondary particles.

5. The secondary battery of claim 4, wherein the second positive electrode active material includes a lithium transition metal composite oxide represented by Chemical Formula 2 below:

[Chemical Formula 2] $Li_{a2}Ni_{b2}Co_{c2}M^3{}_{d2}M^4{}_{e2}O_2$

in Chemical Formula 1,

$M^3$ is Mn, Al, or a combination thereof,
$M^4$ is one or more selected from the group consisting of Zr, W, Y, Ba, Ca, Ti, Mg, Ta, and Nb,
a2, b2, c2, d2, and e2 are atomic fractions of each independent element and satisfy $0.8 \leq a2 \leq 1.3$, $0.8 \leq b2 < 1$, $0 < c2 < 0.2$, $0 < d2 < 0.2$, $0 \leq e2 \leq 0.1$, and b2+c2+d2+e2=1.

6. The secondary battery of claim 4, wherein a weight ratio of the first positive electrode active material to a second positive electrode active material is 15:85 to 99:1.

7. The secondary battery of claim 4, wherein an average particle diameter ($D_{50}$) of the second positive electrode active material is greater than an average particle diameter ($D_{50}$) of the first positive electrode active material.

8. The secondary battery of claim 4, wherein a ratio of an average particle diameter ($D_{50}$) of the second positive electrode active material to an average particle diameter ($D_{50}$) of the first positive electrode active material is 1.1 or more.

9. The secondary battery of claim 4, wherein an average particle diameter ($D_{50}$) of the second positive electrode active material is 6 $\mu$m to 30 $\mu$m.

10. The secondary battery of claim 1, wherein the positive electrode has a porosity of 18% to 32%.

11. The secondary battery of claim 1, wherein the carbon-based active material includes at least one selected from the group consisting of graphite, hard carbon, soft carbon, carbon black, graphene, and fibrous carbon.

12. The secondary battery of claim 1, wherein the silicon-based active material includes a silicon-based compound represented by $SiO_x$ ($0 \leq x < 2$).

13. The secondary battery of claim 1, wherein a weight ratio of the carbon-based active material to the silicon-based active material is 60:40 to 99:1.

14. The secondary battery of claim 1, wherein the negative electrode has a porosity of 20% to 40%.

15. The secondary battery of claim 1, wherein an N/P ratio calculated by Equation C below is 1.0 to 1.2.

N/P ratio = {(Discharge capacity per unit area of negative electrode) / (Discharge capacity per unit area of positive electrode)} [Equation C]

## INTERNATIONAL SEARCH REPORT

| International application No. |
| --- |
| **PCT/KR2023/021042** |

| | |
| --- | --- |
| **A.** | **CLASSIFICATION OF SUBJECT MATTER** |

**H01M 4/36**(2006.01)i; **H01M 4/525**(2010.01)i; **H01M 4/505**(2010.01)i; **H01M 4/587**(2010.01)i; **H01M 4/38**(2006.01)i; **H01M 4/48**(2010.01)i; **H01M 4/62**(2006.01)i; **H01M 10/052**(2010.01)i; **H01M 4/02**(2006.01)i

According to International Patent Classification (IPC) or to both national classification and IPC

| | |
| --- | --- |
| **B.** | **FIELDS SEARCHED** |

Minimum documentation searched (classification system followed by classification symbols)

H01M 4/36(2006.01); H01M 10/04(2006.01); H01M 10/052(2010.01); H01M 4/1315(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지(secondary battery), 단입자(single particle), 탄소(carbon), 실리콘(silicon), 함침(impregnation), 전해질(electrolyte), 양극(cathode), 음극(anode), 입경(diameter)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| Y | KR 10-2020-0131237 A (SUMITOMO CHEMICAL CO., LTD.) 23 November 2020 (2020-11-23) See claims 1 and 4-8; and paragraphs [0031], [0130], [0133], [0154], [0156]-[0158], [0161] and [0207]. | 1-15 |
| Y | KR 10-2022-0037634 A (LG ENERGY SOLUTION, LTD.) 25 March 2022 (2022-03-25) See paragraphs [0006] and [0074]-[0083]; and tables 1-2. | 1-15 |
| A | KR 10-2021-0095149 A (SUMITOMO CHEMICAL CO., LTD.) 30 July 2021 (2021-07-30) See entire document. | 1-15 |
| A | KR 10-2021-0079178 A (LG ENERGY SOLUTION, LTD.) 29 June 2021 (2021-06-29) See entire document. | 1-15 |
| A | KR 10-2022-0080727 A (LG ENERGY SOLUTION, LTD.) 14 June 2022 (2022-06-14) See entire document. | 1-15 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 April 2024** | **01 April 2024** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/021042**

| Patent document cited in search report | | | Publication date (day/month/year) | Patent family member(s) | | | Publication date (day/month/year) |
|---|---|---|---|---|---|---|---|
| KR | 10-2020-0131237 | A | 23 November 2020 | CN | 111837266 | A | 27 October 2020 |
| | | | | EP | 3767718 | A1 | 20 January 2021 |
| | | | | JP | 2019-160571 | A | 19 September 2019 |
| | | | | JP | 6962838 | B2 | 05 November 2021 |
| | | | | US | 2021-0013508 | A1 | 14 January 2021 |
| | | | | WO | 2019-177014 | A1 | 19 September 2019 |
| KR | 10-2022-0037634 | A | 25 March 2022 | None | | | |
| KR | 10-2021-0095149 | A | 30 July 2021 | CN | 113165907 | A | 23 July 2021 |
| | | | | CN | 113165907 | B | 04 April 2023 |
| | | | | EP | 3889112 | A1 | 06 October 2021 |
| | | | | JP | 2020-087879 | A | 04 June 2020 |
| | | | | JP | 6600734 | B1 | 30 October 2019 |
| | | | | US | 2022-0029158 | A1 | 27 January 2022 |
| | | | | WO | 2020-110486 | A1 | 04 June 2020 |
| KR | 10-2021-0079178 | A | 29 June 2021 | None | | | |
| KR | 10-2022-0080727 | A | 14 June 2022 | CN | 116569361 | A | 08 August 2023 |
| | | | | EP | 4250398 | A1 | 27 September 2023 |
| | | | | JP | 2023-553058 | A | 20 December 2023 |
| | | | | WO | 2022-124774 | A1 | 16 June 2022 |

Form PCT/ISA/210 (patent family annex) (July 2022)

**EP 4 618 183 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220183720